# EUROPÄISCHE PATENTSCHRIFT

(11) **EP 0 667 481 B1**
(45) Veröffentlichungstag und Bekanntmachung des Hinweises auf die Patenterteilung: **07.05.1997**
(21) Anmeldenummer: 95810074.5
(22) Anmeldetag: 03.02.1995
(51) Int. Cl.: F16L 37/084

(54) **Rohrsteckverbindung**
Spigot and socket pipe joint
Raccord pour tuyaux à emboîtement

(30) Priorität: 14.02.1994 CH 424/94
(43) Veröffentlichungstag der Anmeldung: 16.08.1995
(73) Patentinhaber: GEBERIT TECHNIK AG, CH-8645 Jona (CH)
(72) Erfinder: Röst, Maarten, CH-8645 Jona (CH)
(74) Vertreter: Groner, Manfred

(56) Entgegenhaltungen:
- DE-B- 1 269 849
- FR-A- 2 525 727
- GB-A- 625 022
- GB-A- 2 091 830
- US-A- 3 744 824
- US-A- 3 920 270
- US-A- 4 229 026

## Beschreibung

Die Erfindung betrifft eine Rohrsteckverbindung gemäss Oberbegriff des Anspruchs 1. Eine Rohrsteckverbindung dieser Art ist durch die CH-A-590 423 bekannt geworden. Das Verbindungsteil ist bei dieser eine Kupplungsmuffe, in die ein Sperrring mit einer Mehrzahl schräg nach einwärts gerichteter, elastischer Lappen eingesetzt ist. Beim Einschieben eines Rohrendes in die Kupplungsmuffe werden die Lappen nach aussen gebogen. Ein Herausziehen des Rohrendes aus der Muffe wird durch ein Einschneiden der scharfkantigen Lappen in die Oberfläche des Rohres verhindert. Als nachteilig wird bei dieser Rohrsteckverbindung angesehen, dass die Rohroberfläche durch den Klemmring vergleichsweise stark verletzt wird.

Eine weitere Rohrsteckverbindung ist durch die DE-A-37 36 587 bekannt geworden. Diese weist einen Sperring auf, der beim Herausziehen des Rohrendes verschoben wird und sich zwischen einer konischen Fläche der Muffe und der Aussenseite des Rohrendes verklemmt. Beim Ueberschreiten einer bestimmten Zugkraft wird die Verbindung gelöst. Es handelt sich hier um eine spezielle Verbindung für den Einsatz in erdbebengefährdeten Gebieten. Eine lediglich reibschlüssige Rohrsteckverbindung für Metallrohre ist in der US-A-4,229,026 offenbart.

Der Erfindung liegt die Aufgabe zugrunde, eine Steckverbindung der genannten Art zu schaffen, die die Rohraussenseite des verbundenen Rohres weniger verletzt und die dennoch eine wenigstens vergleichbare Haltekraft aufweist. Die Verbindung soll zudem einfach herstellbar und montierbar sein. Die Aufgabe ist bei einer Rohrsteckverbindung der genannten Art gemäss Kennzeichen des Anspruchs 1 gelöst. Die Krallen des Klemmringes können so ausgebildet werden, dass in der Rohraussenseite lediglich punktförmige Eindrücke mit geringer Tiefe entstehen.

Der Klemmring kann auch bei ausgezeichneter Haltekraft sehr kostengünstig als Kunststoffspritzgussteil hergestellt werden, was auch im Hinblick auf die Entsorgung vorteilhaft ist. Der Verbindungsteil kann eine Kupplungsmuffe mit zwei Aufnahmeöffnungen und entsprechend zwei Klemmringen sein. Der Verbindungsteil kann jedoch auch an einem anderen Teil angeformt sein und lediglich eine Aufnahmeöffnung aufweisen. Vorteilhafte Weiterbildungen ergeben sich aus den abhängigen Patentansprüchen sowie der nachfolgenden Zeichnung. Es zeigen:
- Fig. 1: einen Längsschnitt durch eine erfindungsgemässe Rohrsteckverbindung,
- Fig. 2: im grösseren Massstab eine Ansicht eines Klemmringes, und
- Fig. 3: ein Schnitt durch den Klemmring entlang der Linie III-III der Fig. 2.

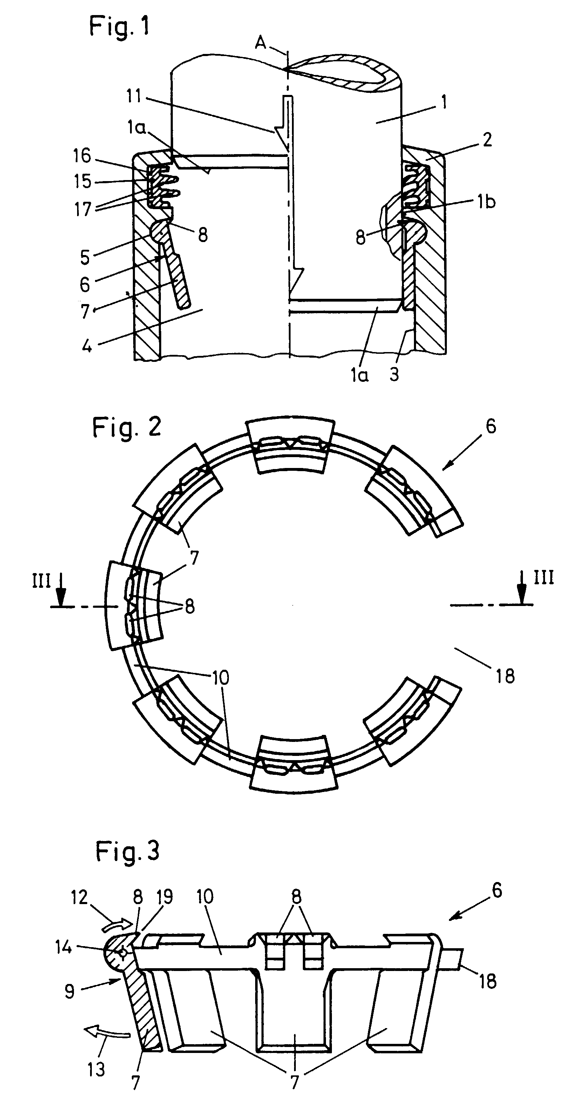

Die Fig. 1 zeigt ein Kunststoffrohr 1, mit einem Rohrende 1a, das in Richtung des Pfeiles 11 in die Aufnahmeöffnung 4 eines Verbindungsteils 2 eingeschoben ist. In eine Innenseite 3 des Verbindungsteils 2 ist eine Ringnut 16 eingearbeitet, in die ein Dichtungsring 15 mit Dichtungslippen 17 eingelegt ist. Im Abstand zur Ringnut 16 ist in die Innenseite 3 eine weitere Ringnut 5 eingearbeitet, in die ein in den Figuren 2 und 3 näher gezeigter Klemmring 6 eingesetzt ist, der das in den Verbindungsteil 2 eingeführte Rohr 1 an einer axialen Verschiebung hindert. Es ist somit durch den Klemmring 6 verhindert, dass das Rohr 1 weiter in den Verbindungsteil eingeschoben oder aus diesem herausgezogen werden kann.

Der Klemmring 6 weist einen kreisförmigen, mit einem Trennschlitz 18 versehenen Ring 10 auf, an dem in gleichen Abständen mehrere schräg nach innen gerichtete Lappen 7 sowie Krallen 8 angeformt sind. Wie besonders die Fig. 3 deutlich zeigt, erstrecken sich die Lappen 7 jeweils schräg nach innen und die Krallen 8 entsprechend schräg nach aussen. Der Klemmring 6 ist vorzugsweise als Kunststoffspritzgussteil hergestellt und wird unter Verengung des Trennschlitzes 18 in die Nut 5 eingelegt. Ein hier nicht gezeigter Ansatz des Verbindungsteiles 2 in der Nut 5 verhindert ein Drehen des Klemmringes 6 im Verbindungsteil 2.

Die Lappen 7 und die Krallen 8 sind vor dem Einsetzen des Rohrendes la in die Aufnahmeöffnung 4 zur Längsachse A der Verbindung geneigt. In der Fig. 1 ist die Lage des Klemmringes 6 vor dem Einsetzen des Rohrendes 1a eingezeichnet. Wie ersichtlich liegen die Krallen 8 mit einer halbrunden Rückseite in der etwa korrespondierenden Nut 5. Die Lappen 7 hingegen erstrecken sich frei und im Abstand zur Innenseite 3 schräg in die Aufnahmeöffnung 4. Wird nun ein Rohr 1 mit seinem freien Ende la wie in Fig. 1 gezeigt, von oben in die Aufnahmeöffnung 4 eingeschoben, so werden nach einer bestimmten Einschubtiefe die nach innen ragenden Lappen 7 nach aussen gegen die Innenseite 3 bewegt.

Gleichzeitig werden die Krallen 8 um eine Drehachse 14 verschwenkt. Da die Krallen 8 rückseitig in der Nut 5 geführt und abgestützt sind, treten spitze Zähne 19 der Krallen 8 aus der Nut 5 heraus und graben sich in die Aussenseite lb des Rohres 1. In der Fig. 3 sind die beim Einschieben des Rohrendes la erfolgenden Bewegungen der Lappen 7 und Krallen 8 mit Pfeilen 13 und 12 angedeutet. Wie ersichtlich, liegt die Drehachse 14 im Bereich der Krallen 8 und somit nahe der Zähne 19. Ein Lappen 7 bildet mit einer angeformten Kralle 8 somit einen zweiarmigen Hebel 9, bei dem der Kraftarm wesentlich grösser ist als der Lastarm. Die Form der Spitzen oder Zähne 19 kann selbstverständlich unterschiedlich ausgebildet sein, diese sind jedoch vorzugsweise vergleichsweise kurz.

Bei eingesetztem Rohrende 1a gemäss Fig. 1 sind die zweiarmigen Hebel 9 wie ersichtlich zwischen die Innenseite 3 des Verbindungsteils 2 und die Aussenseite 1b des Rohrendes 1a eingeklemmt und formschlüssig in der Nut 5 gehalten. Das Rohr 1 ist somit durch den Klemmring 6 fest im Verbindungsteil 2 gehalten und kann wie in Fig. 1 gezeigt, weder nach unten noch nach oben bewegt werden. Das Verschwenken der zweiarmigen Hebel 9 erfolgt nach einer bestimmten Einschubtiefe des Rohres 1 in die Aufnahmeöffnung 4. Diese Einschubtiefe kann durch die Formgebung der Hebel 9 verändert werden. Bei der erfindungsgemässen Rohrsteckverbindung ist somit immer eine bestimmte Einschubtiefe gewährleistet.

Der Klemmring 6 ist vorzugsweise einstückig aus Kunststoff hergestellt. Dies gilt in der Regel auch für den Verbindungsteil 2. Bei der Entsorgung muss dann der Klemmring 6 nicht vom Verbindungsteil 2 getrennt werden. Das Rohr 1 kann auch ein Verbundrohr sein. Denkbar sind auch unrunde Ausführungen.

## Patentansprüche

1. Rohrsteckverbindung für Rohre (1) aus Kunststoff, mit einem Verbindungsteil (2), der an einer Innenseite (3) einer Aufnahmeöffnung (4) für ein Rohrende (1a) eine Ringnut (5) aufweist, in welche ein Klemmring (6) eingesetzt ist, der über seinen Umfang verteilt eine Mehrzahl nach innen gerichteter Krallen (8) aufweist, die sich beim Einschieben des Rohrendes (1a) in die Aufnahmeöffnung (4) zur Bildung einer formschlüssigen Verbindung in die Aussenseite des Rohrendes (1a) einarbeiten, dadurch gekennzeichnet, dass der Klemmring (6) eine Mehrzahl um seinen Umfang verteilte Lappen (7) aufweist, die schräg nach innen gerichtet sind und die mit den genannten Krallen (8) derart wirkverbunden sind, dass beim Einschieben des Rohrendes (1a) in die Aufnahmeöffnung (4) die Lappen (7) radial nach aussen und die Krallen (8) aus einer zurückgezogenen Position etwa radial nach innen bewegt werden und sich in die Aussenseite (1b) des Rohrendes (1a) krallen.

2. Verbindung nach Anspruch 1, dadurch gekennzeichnet, dass jeweils ein Lappen (7) und eine Kralle (8) einen verschwenkbaren zweiarmigen Hebel (9) bilden, derart, dass beim Verschwenken der Lappen (7) nach aussen (13) die Krallen (8) nach innen (12) bewegt werden.

3. Verbindung nach Anspruch 1 oder 2, dadurch gekennzeichnet, dass die Lappen (7) und die Krallen (8) an einem ringförmigen Körper (10) angebracht sind, wobei in Einschubrichtung (11) gesehen die Krallen (8) vor und die Lappen (7) nach dem ringförmigen Körper (10) angeordnet sind.

4. Verbindung nach einem der Ansprüche 1 bis 3, dadurch gekennzeichnet, dass die Krallen (8) rückseitig in der Nut (5) drehbar geführt und abgestützt sind.

5. Verbindung nach einem der Ansprüche 2 bis 4, dadurch gekennzeichnet, dass die zweiarmigen Hebel (9) so ausgebildet sind, dass der Hebelarm der Lappen (7) wesentlich, vorzugsweise mehr als zweimal länger ist als derjenige der Krallen (8).

6. Verbindung nach einem der Ansprüche 1 bis 5, dadurch gekennzeichnet, dass bei eingesetztem und fixiertem Rohrende (la) die Lappen (7) zwischen der Innenseite (3) des Verbindungsteils und der Aussenseite (1b) des Rohrendes (1a) fixiert sind.

7. Verbindung nach einem der Ansprüche 1 bis 6, dadurch gekennzeichnet, dass der Klemmring (6) einstükkig aus Kunststoff hergestellt ist.

8. Verbindung nach einem der Ansprüche 1 bis 7, dadurch gekennzeichnet, dass in die Innenseite (3) des Verbindungsteils (2) eine zweite Nut (16) eingearbeitet ist und in diese Nut ein Dichtungsring (15) eingelegt ist.

9. Verbindung nach einem der Ansprüche 1 bis 8, dadurch gekennzeichnet, dass der Klemmring (6) einen Trennschlitz (18) aufweist.

10. Verbindung nach einem der Ansprüche 1 bis 9, dadurch gekennzeichnet, dass der Klemmring im Verbindungsteil (2) verdrehsicher gehalten ist.

## Claims

1. Spigot and socket pipe connection for plastic pipes (1), having a connecting part (2) which, on an inner side (3) of a receiving opening (4) for a pipe end (1a), has an annular groove (5) into which there is inserted a clamping ring (6) which has distributed over its circumference a plurality of inwardly directly claws (8) which, when the pipe end (1a) is pushed into the receiving opening (4) to form a positively locking connection, work their way into the outer side of the pipe end (1a), characterized in that the clamping ring (6) has a plurality of lugs (7) which are distributed over its circumference, are directed obliquely inwards and are in operative connection with said claws (8) such that, when the pipe end (1a) is pushed into the receiving opening (4), the lugs (7) are moved radially outwards and the claws (8) are moved approximately radially inwards, out of a withdrawn position, and grip into the outer side (1b) of the pipe end (1a).

2. Connection according to Claim 1, characterized in that in each case one lug (7) and one claw (8) form a pivotable two-armed lever (9) such that, when the lugs (7) are pivoted outwards (13), the claws (8) are moved inwards (12).

3. Connection according to Claim 1 or 2, characterized in that the lugs (7) and the claws (8) are attached to an annular body (10), the claws (8) being arranged in front of the annular body (10) and the lugs (7) being arranged behind the same, as seen in the push-in direction (11).

4. Connection according to one of Claims 1 to 3, characterized in that the rear side of the claws (8) is supported and guided rotatably in the groove (5).

5. Connection according to one of Claims 2 to 4, characterized in that the two-armed levers (9) are designed such that the lever arm of the lugs (7) is considerably longer than, preferably more than twice as long as, that of the claws (8).

6. Connection according to one of Claims 1 to 5, characterized in that, when the pipe end (1a) has been introduced and fixed, the lugs (7) are fixed between the inner side (3) of the connecting part and the outer side (1b) of the pipe end (1a).

7. Connection according to one of Claims 1 to 6, characterized in that the clamping ring (6) is produced in one piece from plastic.

8. Connection according to one of Claims 1 to 7, characterized in that a second groove (16) is made in the inner side (3) of the connecting part (2), and a sealing ring (15) is positioned in said groove.

9. Connection according to one of Claims 1 to 8, characterized in that the clamping ring (6) has a parting slit (18).

10. Connection according to one of Claims 1 to 9, characterized in that the clamping ring is retained in the connecting part (2) such that it is secured against rotation.

## Revendications

1. Raccord à enfichage pour des tuyaux (1) en matière plastique, comportant une partie (2) qui présente, au niveau d'une face intérieure (3) d'une ouverture de logement (4) pour une extrémité de tuyau (1a), une gorge annulaire (5), dans laquelle est insérée une bague de serrage (6), qui possède une multiplicité de crampons (8) répartis sur la périphérie de la bague et dirigés vers l'intérieur et qui, lors de l'introduction de l'extrémité (1a) du tuyau dans l'ouverture de réception (4) mordent dans la face extérieure de l'extrémité (1a) du tuyau pour former une liaison par formes complémentaires, caractérisé en ce que la bague de serrage (6) possède une multiplicité de languettes (7) réparties sur sa périphérie et qui sont orientées obliquement vers l'intérieur et coopèrent avec les crampons indiqués (8) de telle sorte que, lors de l'introduction de l'extrémité (1a) du tuyau dans l'ouverture de réception (4), les pattes (7) sont déplacées radialement vers l'extérieur et les crampons (8) sont déplacés approximativement radialement vers l'intérieur à partir d'une position rétractée et s'enfichent dans la face extérieure (1b) de l'extrémité (1a) du tuyau.

2. Raccord selon la revendication 1, caractérisé en ce que respectivement une languette (7) et un crampon (8) forment un levier pivotant (9) à deux bras de sorte que, lors du basculement des languettes (7) vers l'extérieur (13), les crampons (8) sont déplacés vers l'intérieur (12).

3. Raccord selon la revendication 1 ou 2, caractérisé en ce que les languettes (7) et les crampons (8) sont disposés sur un corps annulaire (10), auquel cas, lorsqu'on regarde dans la direction d'introduction (11), les crampons (8) sont disposés en amont du corps annulaire (10) et les languettes (7) sont disposées en aval de ce corps.

4. Raccord selon l'une des revendications 1 à 3, caractérisé en ce que les crampons (8) sont guidés, sur leur côté arrière, de manière à pouvoir tourner et prennent appui dans la gorge (5).

5. Raccord selon l'une des revendications 2 à 4, caractérisé en ce que les leviers (9) à deux bras sont agencés de telle sorte que le bras de levier des languettes (7) possède une longueur nettement supérieure, de préférence de plus du double, à la longueur des crampons (8).

6. Raccord selon l'une des revendications 1 à 5, caractérisé en ce que, lorsque l'extrémité (1a) du tuyau est introduite et fixée, les languettes (7) sont fixées entre la face intérieure (3) de la partie du raccord et la face extérieure (1b) de l'extrémité (1a) du tuyau.

7. Raccord selon l'une des revendications 1 à 6, caractérisé en ce que la bague de serrage (6) est réalisée d'un seul tenant en matière plastique.

8. Raccord selon l'une des revendications 1 à 7, caractérisé en ce qu'une seconde gorge (16) est usinée dans la face intérieure (3) de la partie (2) du raccord et qu'une bague d'étanchéité (15) est insérée dans cette gorge.

9. Raccord selon l'une des revendications 1 à 8, caractérisé en ce que la bague de serrage (6) possède une fente de séparation (18).

10. Raccord selon l'une des revendications 1 à 9, caractérisé en ce que la bague de serrage est retenue avec blocage en rotation dans la partie (2) du raccord.
